# EUROPEAN PATENT APPLICATION

(11) **EP 3 597 970 A1**
(43) Date of publication of application: **22.01.2020**
(21) Application number: 18461577.1
(22) Date of filing: 16.07.2018
(51) Int. Cl.: F16K 17/04, B64D 25/14, F17C 13/04, F16K 17/16, F16K 17/196

(54) **VALVE ASSEMBLY**

(71) Applicant: Goodrich Corporation, Charlotte, NC 28217 (US)
(72) Inventor: CZARNECKI, Pawe, 58-100 Swidnica (PL); WIKTORKO, ukasz, 50-367 Wroc aw (PL)
(74) Representative: Dehns

(57) **Abstract**

A valve assembly comprising: a valve housing defining a flow path to allow fluid flow between a first end configured to be connected to a fluid source and a second end configured to be connected to a pressurised fluid container, the valve housing defining a valve seat in the flow path; a valve member moveable within the housing between a closed position wherein the valve member is located in the valve seat so as to prevent fluid flow between the first and second ends of the valve housing, and an open position wherein the valve is spaced from the valve seat so as to allow fluid flow along the flow path; and biasing means within the valve housing and connected to the valve member to bias the valve member in the closed position; and characterised in that the valve member has formed therein across at least part of the radial dimension of the flow path, a frangible part configured to rupture if, while the valve member is in the closed position, a pressure and/or temperature acting on the frangible part exceeds a rupture threshold, thus allowing flow along the flow path.

## Description

### TECHNICAL FIELD

The present disclosure relates to valve assemblies and in particular, but not exclusively, to a valve assembly provided for charging a pressurized fluid source for, e.g., an inflatable device to be inflated on release of the fluid from the source, e.g. for an inflatable escape slide in an aircraft or for an inflatable rescue raft on a ship or the like.

### BACKGROUND

Valves are used in many applications to allow/prevent or control the flow of fluid between a source and a destination. Valves are used, for example, in inflatable escape slide systems provided as emergency exits on aircraft. The escape slide is connected to a source e.g. a canister or cylinder of pressurised fluid. Generally, one valve on the cylinder outlet is locked to prevent the fluid flowing from the cylinder into the slide or, indeed, escaping from the cylinder at all. Another valve is provided at the cylinder inlet for controlling the filling or 'charging' of the cylinder from a fluid source. The valve is a one-way valve such as a ball valve that allows fluid to be charged to the cylinder until the cylinder is full and the fluid within the cylinder is pressurised to such an extent that when it is released, in an emergency, the pressure is enough to force the fluid into the inflatable slide to inflate it quickly.

Because these cylinders of pressurised fluid are used in aircraft and, therefore, in extreme conditions, extra safety precautions must be taken to ensure that the cylinder remains ready for use at any time but also to prevent explosion if, for example, the pressure and/or temperature in the cylinder increases beyond safe levels due to e.g. the operating environment.

In conventional systems, therefore, a safety valve is provided in or on the cylinder to provide a release in the event that the pressurised fluid in the cylinder exceeds safety threshold values of pressure and/or temperature.
Evacuation slide systems or other inflatable systems having a charged cylinder will, conventionally, therefore have at least three valve assemblies - the outlet/inflation valve to control the outlet of pressurised fluid, the charging valve to control the inflow of fluid to charge the cylinder and a safety valve. Each of these valves comprises several mechanical parts (for safety reasons, the valves in evacuation systems have to be mechanical and not rely on an electrical control) which adds to the overall size, weight and maintenance requirements of the evacuation system. This is particularly an issue in aircraft where weight and in-flight maintenance should be minimised and where there are space limitations for storage.

There is, therefore, a need for a valve solution that avoids these disadvantages whilst still ensuring safety and reliability.

### SUMMARY

The present disclosure, in one aspect, provides a combined charging and safety valve. More specifically, the disclosure provides a valve assembly comprising: a valve housing defining a flow path to allow fluid flow between a first end configured to be connected to a fluid source and a second end configured to be connected to a pressurised fluid container, the valve housing defining a valve seat in the flow path; a valve member moveable within the housing between a closed position wherein the valve member is located in the valve seat so as to prevent fluid flow between the first and second ends of the valve housing, and an open position wherein the valve is spaced from the valve seat so as to allow fluid flow along the flow path; and biasing means within the valve housing and connected to the valve member to bias the valve member in the closed position; and characterised in that the valve member has formed therein across at least part of the radial dimension of the flow path, a frangible part configured to rupture if, while the valve member is in the closed position, a pressure and/or temperature acting on the frangible part exceeds a rupture threshold, thus allowing flow along the flow path.

In another aspect, the disclosure provides a pressurised fluid inflation system comprising a pressurised fluid container having a charge port to receive fluid from a fluid source, and a valve assembly as described above to regulate flow at the charge port.

The valve member can take a variety of forms and structures provided it can block and open the flow path by movement relative to the housing. In a preferred embodiment, this is in the form of a ball. The biasing means is preferably a spring arranged to bias, together with the force of the pressurised fluid in the cylinder, the ball etc. in the closed position when the container or the pressure of the fluid in the container has reached its desired operation pressure. This then prevents more fluid being charged into the container and also prevents leakage of fluid from the container.

The frangible part is formed in the valve member. This can be formed as a separate part and fitted into the valve member or the two parts can be formed together. The frangible part should be constructed such that if a pressure and/or temperature of the fluid in the container exceeds a predetermined threshold, the frangible part ruptures sufficient to allow fluid to flow through the flow path past the location of the frangible part. The threshold is preferably determined based on a pressure/temperature that could cause the closed container to explode. The frangible part may be, e.g. a membrane provided across the valve member.

The valve assembly, or at least parts thereof such as the housing, can be formed by 3D printing or additive manufacture. This means that they can be light and can easily be designed in a wide variety of sizes and shapes.

Preferred embodiments will now be described by way of example only, with reference to the drawings.

### BRIEF DESCRIPTION OF THE DRAWINGS

Figure 1 shows part of an inflation system into which the valve assembly of this disclosure can be incorporated.
Figure 2 is a side sectional view of a valve assembly according to this disclosure.

### DETAILED DESCRIPTION

Valve assemblies as described below can be used in a variety of fields and flow control systems, but particularly where one side of the valve is connected to a pressurised fluid container. The assembly will be mainly described in relation to a pressurised fluid container such as those used to inflate an aircraft evacuation slide, but such valve assemblies may find application in other areas, e.g. life rafts, off-shore emergency escape systems or, in fact, and inflatable objects.

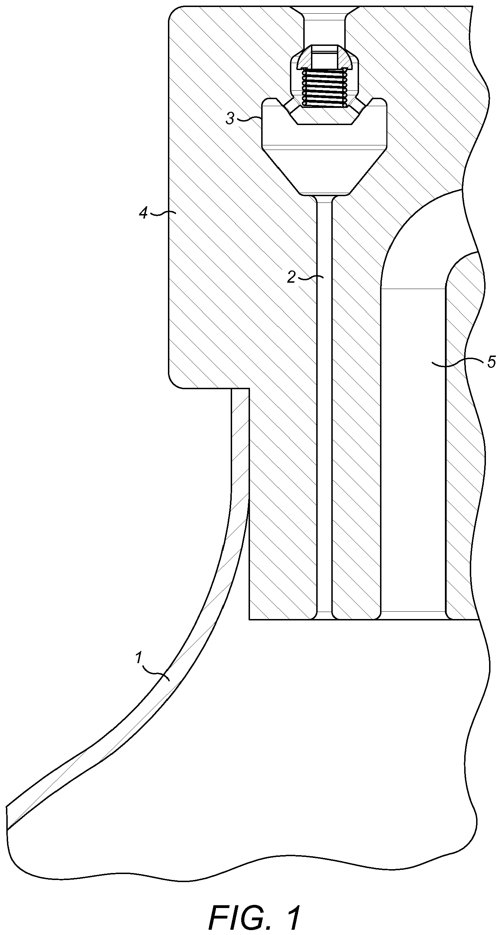

Referring first to Fig. 1, this shows the top or neck part of a cylinder 1 to be filled with a pressurised fluid. The cylinder is filled from a fluid source (not shown) via a charging channel 2 feeding into the neck of the cylinder 1. A valve assembly 3 is mounted in a valve housing 4 in flow engagement with the charging channel 2 - i.e. the valve assembly is positioned in the flow path between the fluid source and the cylinder. The cylinder 1 is also connected to an outlet or 'main' channel 5 via which the fluid is discharged from the cylinder. The main channel 5 may be connected at its other end to e.g. an inflatable evacuation slide. A further valve assembly (not shown) can be provided in the flow path of the main channel to regulate the flow between the cylinder and the slide.

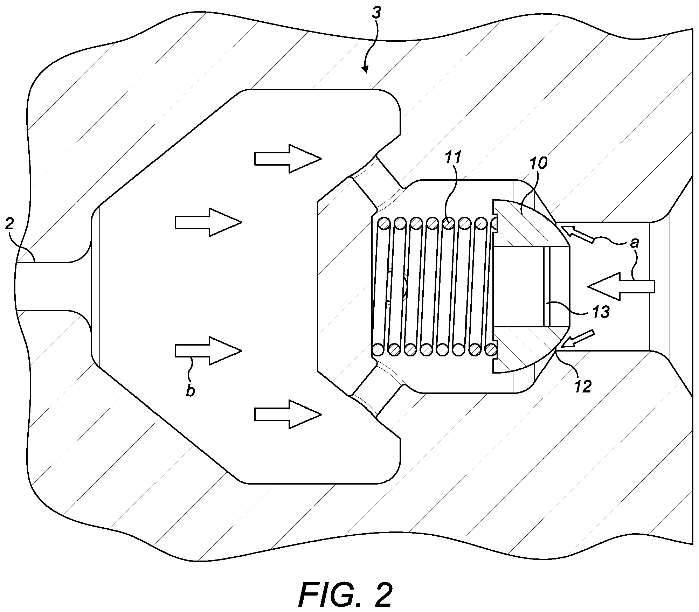

The valve assembly 3 in the charging channel 2 functions as a charging valve as well as a safety valve as will be described further below with reference to Fig. 2
Fig. 2 shows a valve assembly 3 in more detail. One end of the valve assembly (here, to the right of Fig. 2 is the first end configured to be connected in the charging line to the fluid source (not shown) from which the cylinder is charged or filled. The direction of flow of the fluid during charging is shown by the 'charging way' arrows a. The second end of the valve assembly is arranged to be connected via the charging channel 2 to the cylinder 1.

During charging or filling of the cylinder fluid flows from the source, via the charging way through the valve assembly 3 to the cylinder 1. The ball valve element 10 and spring 11, described further below, are configured such that until the cylinder is fully charged to a predetermined pressure, the flow path from the first to the second end is open to allow fluid flow. Thus, in the example of Fig. 2, the ball valve element 10 is located slightly behind the valve seat 12 defined in the valve housing so that there is a gap between the valve element and the housing to allow the charging fluid to flow therebetween. The strength of the biasing spring 11 is selected such that it alone biases the spring to this position when charging fluid is acting on the other side of the valve element. In addition to the spring bias, however, the force of the pressurised fluid (arrows b) in the cylinder acts against the ball valve element. Thus, as the cylinder 1 becomes filled and the pressure in the cylinder rises, the sum of the fluid pressure in the cylinder and the spring bias begin to exceed the counter-force of the charging fluid on the other side of the valve element until the pressure in the cylinder has reached a predetermined operation pressure. At this pressure, the combined force acting on the left side of the valve element in Fig. 2 exceeds the charging fluid force acting on the right side and this pushes the valve element against the valve seat 12 to close off the gap and thus close off the flow path. Fluid can no longer enter or exit the cylinder.

As mentioned above, the extreme environments in which such cylinders may be stored can result in the temperature and/or pressure inside the cylinder increasing to an unsafe level that could cause the cylinder or the valve to explode and a safety mechanism is, therefore, necessary.

According to the present disclosure, rather than adding an additional safety valve mechanism and adding to the weight and size and complexity of the system, the safety mechanism is incorporated into the existing charge valve arrangement.

Again with reference to Fig. 2, a frangible part - here a membrane 13 is formed or provided or incorporated into the valve element across at least part of the flow path between the valve ends. In the example shown, the valve element is essentially a hollow or partly hollow ball across the interior of which is provided the membrane 13. The material and configuration of the membrane 13 is selected such that when the valve is closed after the cylinder 1 has been fully charged, a pressure and or temperature increase causing the pressure/temperature acting on the membrane to exceed a predetermined safety threshold, causes the membrane 13 to rupture. This then opens the flow path between the valve ends allowing fluid to safely discharge.

The membrane material can be a metal or high strength plastic that melts at the rupture temperature or breaks at a given pressure.

The valve housing 4 can be formed in any desired shape, particularly if made using additive manufacturing. This allows, for example, particularly ergonomic shapes to be formed or assembly to be easily custom-built.

The combined assembly avoids the need for two separate channels; one for charging and a safety channel and also avoids the need for two completely separate structures.

The described valve assembly provides a lightweight, simple, yet reliable solution to controlling fluid flow for charging a container from a fluid source. By 3D printing the assembly using composite materials a single piece of material can be used and different shapes and designs can be quickly, easily and inexpensively produced.

## Claims

1. A valve assembly comprising:
a valve housing defining a flow path to allow fluid flow between a first end configured to be connected to a fluid source and a second end configured to be connected to a pressurised fluid container, the valve housing defining a valve seat in the flow path;
a valve member moveable within the housing between a closed position wherein the valve member is located in the valve seat so as to prevent fluid flow between the first and second ends of the valve housing, and an open position wherein the valve is spaced from the valve seat so as to allow fluid flow along the flow path; and
biasing means within the valve housing and connected to the valve member to bias the valve member in the closed position; and **characterised in that** the valve member has formed therein across at least part of the radial dimension of the flow path, a frangible part configured to rupture if, while the valve member is in the closed position, a pressure and/or temperature acting on the frangible part exceeds a rupture threshold, thus allowing flow along the flow path.

2. The valve assembly of claim 1, wherein the valve member is a ball valve.

3. The valve assembly of claim 1 or 2, wherein the biasing means is a spring.

4. The valve assembly of any preceding claim, wherein the frangible part is a membrane in the valve member.

5. The valve assembly of claim 2, wherein the ball valve defines a cavity and the frangible part is a membrane formed across the cavity.

6. The valve assembly of any preceding claim, wherein the housing is formed by additive manufacture.

7. A pressurised fluid inflation system comprising a pressurised fluid container having a charge port to receive fluid from a fluid source, and a valve assembly as defined in any preceding claim.
